# EUROPÄISCHE PATENTANMELDUNG

(11) **EP 3 926 024 A1**
(43) Veröffentlichungstag der Anmeldung: **22.12.2021**
(21) Anmeldenummer: 20180542.1
(22) Anmeldetag: 17.06.2020
(51) Int. Cl.: C09K 21/12, C09K 21/14

(54) **PHOSPHORHALTIGE FLAMMSCHUTZMITTELMISCHUNGEN, EIN VERFAHREN ZU IHRER HERSTELLUNG UND IHRE VERWENDUNG SOWIE EPOXIDHARZFORMULIERUNGEN, DIE DIESE FLAMMSCHUTZMITTELMISCHUNGEN ENTHALTEN**

(71) Anmelder: Clariant International Ltd, 4132 Muttenz (CH)
(72) Erfinder: OSTEROD, Frank, 50374 Erfstadt (DE); SICKEN, Martin, 51149 Köln (DE); BAUER, Harald, 50170 Kerpen (DE); HAUENSTEIN, Oliver, 53225 Bonn (DE)
(74) Vertreter: Jacobi, Carola

(57) **Zusammenfassung**

Die vorliegende Erfindung betrifft phosphorhaltige Flammschutzmittelmischungen, enthaltend einzelne Flammschutzmittel mit jeweils einer oder mehreren funktionellen Gruppen der Formeln (I), (II) und (III), 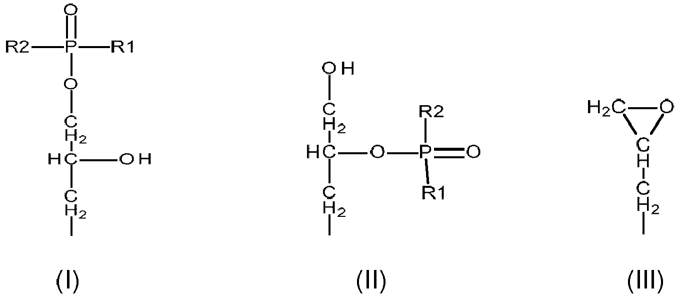 wobei, bezogen auf die Gesamtmenge an funktionellen Gruppen in der Flammschutzmittelmischung, 1 bis 98 mol-% funktionelle Gruppen der Formel (I), 1 bis 35 mol-% funktionelle Gruppen der Formel (II) und 1 bis 98 mol-% funktionelle Gruppen der Formel (III) enthalten sind, und wobei R¹ und R² gleich oder verschieden sind und unabhängig voneinander, Wasserstoff, C₁-bis C₁₂-Alkyl, linear oder verzweigt und/oder C₆-bis C₁₈-Aryl bedeuten und die Summe von (I), (II) und (III) immer 100 mol-% beträgt.

## Beschreibung

Verbundwerkstoffe, die in Form von Composite-Bauteilen, im Transportbereich (Schiene, Luft, Schiff, Straße usw.) vielfach eingesetzt werden um Gewicht zu sparen, unterliegen strengen Brandschutzanforderungen damit die Sicherheit der Nutzer bzw. Passagiere gewährleistet wird.

Insbesondere die europäische Norm EN 45545-2 im Schienenverkehr sowie die FAR 25.853 für die Luftfahrt fordern strenge Grenzwerte für das Brandverhalten, Rauchverhalten und die Rauchgastoxizität.

Für die Fertigung solcher Composite-Bauteile stehen verschiedene Methoden zur Verfügung. Oft ist die Verwendung von Lösungsmitteln, wie sie etwa im Elektronikbereich zur Fertigung von Prepregs (US-2012/0279769A1) beschrieben wird, nicht gewünscht oder technisch nicht möglich.

Somit müssen solche Formulierungen, die neben dem eigentlichen Harz noch weitere Komponenten wie Füllstoffe, Flammschutzmittel und Härter enthalten können, über eine ausreichend niedrige Viskosität verfügen, damit das Verstärkungsmaterial (z.B. Glasfasern oder Carbonfasern in Form von Fasern, Geweben, Gelegen, Gestricken oder Gewirken) gleichmäßig benetzt wird und das entsprechende Bauteil gefertigt werden kann.

Daher muss das eingesetzte Harz eine niedrige Ausgangsviskosität und ein gutes Verlaufs- und Benetzungsverhalten aufweisen, damit die Composite-Bauteile technisch und wirtschaftlich gut hergestellt werden können. Zudem darf das eingesetzte Flammschutzmittel die Verarbeitung nicht negativ beeinflussen.

Zur Fertigung von Composite-Bauteilen werden unterschiedliche Harzsysteme verwendet, die jedoch vielfach nicht über ein ausreichend reduziertes Brandverhalten verfügen, sodass es hier erforderlich ist entsprechende Flammschutzmittel einzusetzen, um eine Anwendung, insbesondere im Transportbereich, zu ermöglichen.

Eine Fertigung von Composite-Bauteilen unter Einsatz von festen Flammschutzmitteln ist oft nicht möglich, weil der Einsatz solcher Flammschutzmittel zu einem starken Anstieg der Viskosität führt und somit die Fertigung der Composite-Bauteile verhindert wird oder es werden erhebliche Mengen an Lösungsmittel benötigt, die dann wieder entfernt werden müssen.

Beim Resin Transfer Molding (RTM-Verfahren), das gerne zur Herstellung von Formteilen eingesetzt wird, wird die Formmasse mittels Kolben von einer meist beheizten Vorkammer über Verteilerkanäle in die formbindende Kammer eingespritzt, in der die Formmasse unter Wärme und Druck aushärtet.

Sowohl beim RTM-Verfahren als auch bei Infusionsverfahren wird oft ein Filtrationseffekt beobachtet, wenn die vorgenannten Formulierungen eingesetzt werden.

Die EP-3309190A1 beschreibt ein Verfahren zur Herstellung von Epoxidharzen unter Verwendung von substituierten Phosphinsäuresalzen, die als additiver Füllstoff zugegeben werden. Nachteilig ist hier der starke Viskositätsanstieg bei der Verarbeitung und dass der Füllstoff in störender Weise im Endprodukt verbleibt.

Die DE-4308187A1 beschreibt die Herstellung von phosphormodifizierten Epoxidharzen unter Verwendung von Phosphinsäureanhydriden in Lösungsmittelhaltigen Systemen, die aufwendig getrocknet werden müssen.

Die EP-2794623B1 beschreibt die Verwendung von Dialkylphosphinsäure-Mischungen durch Einmischen in ein Polymersystem. Die damit hergestellten Epoxidharze weisen eine reduzierte thermische Expansion auf.

Die Verwendung von phosphormodifizierten Epoxidharzen die zwei Regioisomere enthalten, wird in CA-A-2826672 beschrieben. Hier wird zur Modifizierung des Epoxidharzes 9,10-Dihydro-9-oxa-10-phosphaphenanthren-10-oxid (DOPO) eingesetzt, wobei beide Regioisomere eine P-C Bindung zum C₂- und C₃-Kohlenstoffatoms des umgesetzten Epoxids aufweisen.

Die WO-2017/117383A1 beschreibt die Verwendung von brandgeschützten Composite-Bauteilen im Luftfahrtsektor. Die hierfür benötigten Epoxidharze werden mit DOPO bzw. Diethylphosphinsäure in Gegenwart eines Lösungsmittels modifiziert und die Epoxidharze sind flüssig oder fest und weisen ein EpoxyÄquivalent von 170 bis 450 g/mol auf.

Insbesondere fehlt es an Flammschutzmitteln und Flammschutzmittelmischungen die bereits in geringen Mengen eine gute Flammschutzwirkung im Epoxidharz erzielen und die Viskosität der Epoxidharzformulierung nicht negativ beeinflussen und daher ein gutes Benetzungsverhalten zeigen. Zudem fehlt es an Füllstofffreien, flammgeschützten Epoxidharzformulierungen, die auch lösungsmittelfrei verarbeitet werden können und im finalen Bauteil über gute mechanische und physikalische Eigenschaften (z. B. hohe Glasübergangstemperaturen) verfügen.

Gelöst wird diese Aufgabe erfindungsgemäß durch phosphorhaltige Flammschutzmittelmischungen, enthaltend einzelne Flammschutzmittel mit jeweils einer oder mehreren funktionellen Gruppen der Formeln (I), (II) und (III), 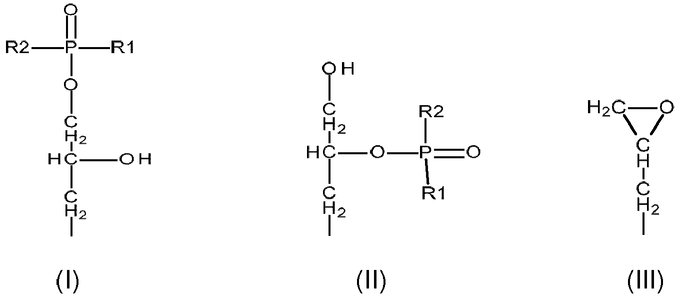 wobei, bezogen auf die Gesamtmenge an funktionellen Gruppen in der Flammschutzmittelmischung, 1 bis 98 mol-% funktionelle Gruppen der Formel (I), 1 bis 35 mol-% funktionelle Gruppen der Formel (II) und 1 bis 98 mol-% funktionelle Gruppen der Formel (III) enthalten sind, und wobei R¹ und R² gleich oder verschieden sind und unabhängig voneinander, Wasserstoff, C₁- bis C₁₂-Alkyl, linear oder verzweigt und/oder C₆- bis C₁₈-Aryl bedeuten und die Summe von (I), (II) und (III) immer 100 mol-% beträgt.

Bevorzugt sind in den phosphorhaltigen Flammschutzmittelmischungen R¹ und R² gleich oder verschieden und bedeuten, unabhängig voneinander, Wasserstoff, Methyl, Ethyl, n-Propyl, iso-Propyl, n-Butyl, iso-Butyl, sec-Butyl, tert- Butyl, n-Pentyl, 2-Methylbutyl, 3-Methylbutyl, 3- Methylbut-2-yl, 2-Methylbut-2-yl, 2,2-Dimethylpropyl, Hexyl, Heptyl, Octyl, Nonyl, Decyl, Cyclopentyl, Cyclopentylethyl, Cyclohexyl, Cyclohexylethyl und/oder Phenyl.

Besonders bevorzugt sind R¹ und R² gleich oder verschieden und bedeuten, unabhängig voneinander, Methyl, Ethyl, n-Propyl, iso-Propyl, n-Butyl, iso-Butyl, sec-Butyl und/oder tert-Butyl.

Bevorzugt enthalten die phosphorhaltigen Flammschutzmittelmischungen
5 bis 94 mol-% an Formel (I),
3 bis 35 mol-% an Formel (II) und
3 bis 92 mol-% an Formel (III)
wobei die Summe von (I), (II) und (III) immer 100 mol-% beträgt.

Besonders bevorzugt enthalten die phosphorhaltigen Flammschutzmittelmischungen
25 bis 90 mol-% an Formel (I),
5 bis 30 mol-% an Formel (II) und
5 bis 70% mol-% an Formel (III)
wobei die Summe von (I), (II) und (III) immer 100 mol-% beträgt.

Bevorzugt ergibt sich im Gemisch der Formeln (I) und (II) der Anteil T (in mol-%) an Formel (II) nach T = [y/(x+y)] ^{∗} 100% mit der Maßgabe, dass x die Menge an Formel (I) und y die Menge an Formel (II), jeweils in mol-%, darstellt.

Bevorzugt beträgt T 10 bis 70 mol-%.

Besonders bevorzugt beträgt T 20 bis 45 mol-%.

Die erfindungsgemäßen phosphorhaltigen Flammschutzmittelmischungen können auch in einer Form vorliegen, dass die einzelnen Flammschutzmittel mit den funktionellen Gruppen (I), (II) und (III) in den Flammschutzmittelmischungen den Formeln R²¹-O-(I), R²¹-O-(II) und/oder R²¹-O-(III) entsprechen, wobei es sich bei R²¹ um lineare oder verzweigte Alkylstrukturen mit 2 bis 8 Kohlenstoffatomen und/oder um Polypropylenoxide des Typs -[-CH(CH₃)-CH₂-O-]_{K}-H oder -[-CH₂-CH(CH₃)-O-]_{K}-H und/oder um Polyethylenoxide des Typs -[-CH₂-CH₂-O-]_{K}-H handelt wobei K jeweils eine ganze Zahl von 1 bis 12 bedeutet.

In einer anderen Ausführungsform entsprechen die einzelnen Flammschutzmittel mit den funktionellen Gruppen (I), (II) und (III) in den Flammschutzmittelmischungen der Formel D-O-[-CH₂-CH₂-O-]ᵣ-E und/oder D-O-[-CH(CH₃)-CH₂-O-]ᵣ-E, wobei D und E gleich oder verschieden sein können und jeweils für die Formel (I), (II) und/oder (III) stehen und r eine ganze Zahl von 1 bis 12 bedeutet.

In einer noch anderen Ausführungsform entsprechen die einzelnen Flammschutzmittel mit den funktionellen Gruppen (I), (II) und (III) in den Flammschutzmittelmischungen der Formel (IV),

E-Q-D (IV)

wobei Q für die nachfolgende Formel (V) steht 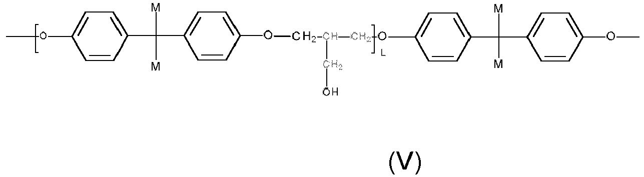 in der M Wasserstoff oder Methyl bedeutet und wobei D und E gleich oder verschieden sein können und jeweils für die Formeln (I), (II) und/oder (III) stehen und L eine ganze Zahl von 0 bis 5 bedeutet.

In einer weiteren Ausführungsform entsprechen die einzelnen Flammschutzmittel mit den funktionellen Gruppen (I), (II) und (III) in den Flammschutzmittelmischungen der Formel (VI) 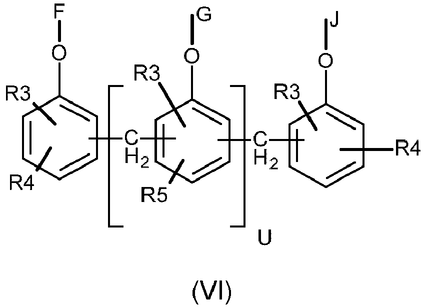 wobei F, G und J gleich oder verschieden sein können und jeweils für die Formeln (I), (II) und/oder (III) stehen, U eine ganzzahlige Zahl zwischen 1 und 12 bedeutet, R³ Wasserstoff, Methyl, Ethyl, Propyl und/oder Butyl bedeutet sowie R⁴ und R⁵ unabhängig voneinander Wasserstoff, Methyl und/oder (VII) 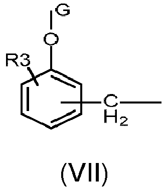 bedeuten wobei G und R³ wie zuvor definiert sind.

Schließlich können die einzelnen Flammschutzmittel mit den funktionellen Gruppen (I), (II) und (III) in den Flammschutzmittelmischungen der Formel (VIII) 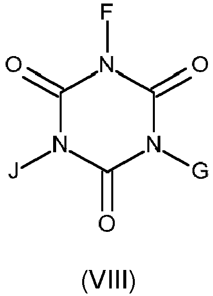 entsprechen, wobei F, G und J gleich oder verschieden sein können und jeweils für die Formeln (I), (II) und/oder (III) stehen.

Die Erfindung betrifft auch phosphorhaltige Flammschutzmittelmischungen enthaltend Flammschutzmittel mit jeweils einer oder mehreren funktionellen Gruppen der Formeln (I), (II) und (III), 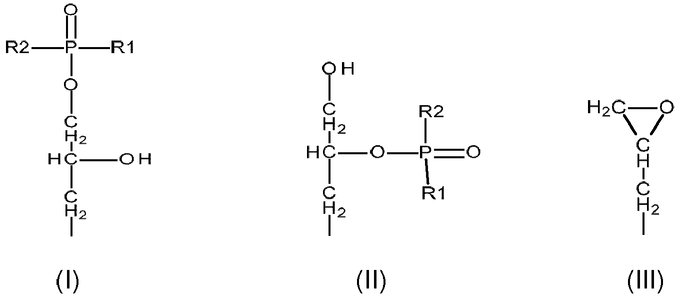 wobei und R¹ und R² gleich oder verschieden sind und unabhängig voneinander, Wasserstoff, C₁- bis C₁₂-Alkyl, linear oder verzweigt und/oder C₆- bis C₁₈-Aryl bedeuten, dadurch gekennzeichnet, dass die Flammschutzmittel durch Umsetzung mindestens einer Phosphinsäure mit einer monofunktionellen, difunktionellen, multifunktionellen und/oder heterocyclischen Epoxidverbindung hergestellt wurden.

Bevorzugt wird für die Herstellung dieser Flammschutzmittelmischungen mindestens eine monofunktionelle Epoxidverbindung aus der Gruppe der Glycidylether des Polyethylenoxids (IX) 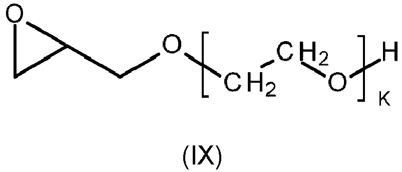 oder des Polypropylenoxids (X), (XI) 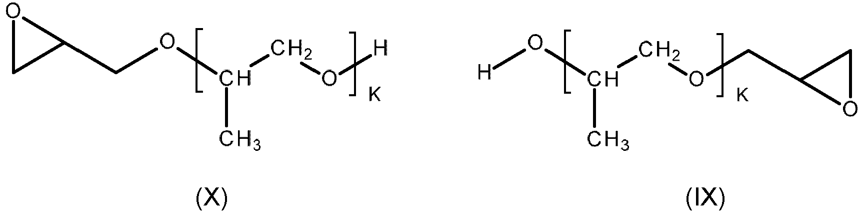 oder aus der Gruppe der Glycidylverbindungen eines linearen oder verzweigten aliphatischen Mono-Alkohols mit 2 bis 8 Kohlenstoffatomen verwendet, wobei K eine ganzzahlige Zahl von 1 bis 12 bedeutet.

Bevorzugt wird für die Herstellung dieser Flammschutzmittelmischungen auch eine difunktionelle Epoxidverbindung aus der Gruppe der Diglycidylether des Bisphenol A, des Bisphenol F und/oder des Bisphenol A/F der Formel (XII) 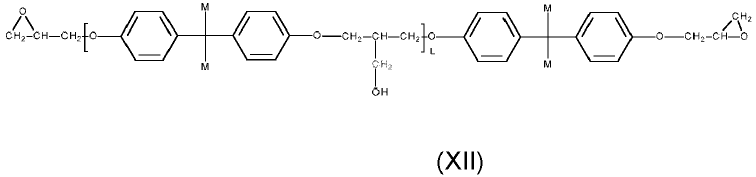 verwendet, wobei M Wasserstoff und/oder Methyl und L eine ganzzahlige Zahl von 0 bis 5 bedeutet.

Die phosphorhaltigen Flammschutzmittelmischungen können auch dadurch gekennzeichnet sein, dass für die Herstellung dieser Flammschutzmittelmischungen mindestens eine difunkionelle Epoxidverbindung aus der Gruppe der Diglycidylverbindung des Polypropylenoxids (XIII) 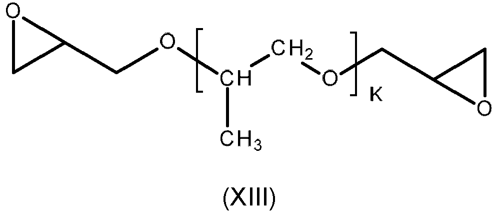 oder des Polyethylenoxids (XIV) 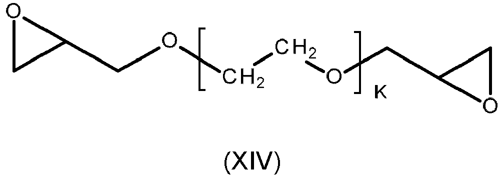 oder aus der Gruppe der Diglycidylverbindungen eines linearen oder verzweigten aliphatischen Diols mit 2 bis 8 Kohlenstoffatomen verwendet wird, wobei K eine ganzzahlige Zahl von 0 bis 12 bedeutet.

In einer anderen Ausführungsform wird für die Herstellung dieser Flammschutzmittelmischungen mindestens eine multifunktionelle Epoxidverbindung aus der Gruppe der Epoxy-Novolac-Harze, insbesondere der Epoxy-Novolac-Harze auf Basis des Phenols und Kresols der Formel (XV) 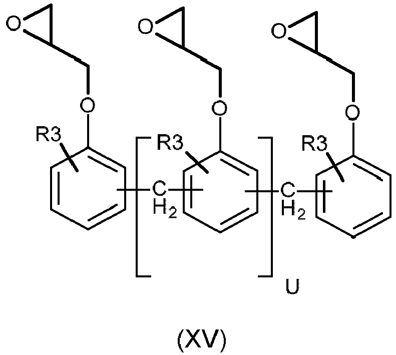 eingesetzt, wobei U eine ganzzahlige Zahl zwischen 1 und 12 und R³ Wasserstoff und/oder Methyl bedeutet.

In einer weiteren Ausführungsform wird für die Herstellung der Flammschutzmittelmischungen mindestens eine heterocyclische Epoxidverbindung aus der Gruppe der Triglycidylisocyanurate, N-Glycidylverbindungen von aromatischen Aminen und heterocyclischen Stickstoffbasen wie N,N-Diglycidylanilin, N,N,O-Triglycidyl-p-aminophenol, Triglycidylisocyanurat und N,N,N,N-Tetraglycidyl-bis-(p-aminophenyl)-methan eingesetzt.

Bevorzugt erfüllen die erfindungsgemäßen phosphorhaltigen Flammschutzmittelmischungen die Halogenfreiheit nach der Norm IEC 61249-2-21 oder sind halogenfrei.

Die Erfindung betrifft auch ein Verfahren zur Herstellung von Flammschutzmittelmischungen nach einem oder mehreren der Ansprüche 1 bis 20, dadurch gekennzeichnet, dass eine Umsetzung mindestens einer Phosphinsäure, Alkylphosphinsäure und/oder Dialkyklphosphinsäure mit dem geöffneten Ring eines Epoxids in Anwesenheit eines Katalysators erfolgt.

Bevorzugt handelt es sich bei dem Katalysator um Ethyltriphenylphosphoniumchlorid, Ethyltriphenylphosphoniumbromid, Ethyltriphenylphosphoniumiodid, Ethyltriphenylphosphoniumacetat, Ethyltriphenylphosphoniumphosphat, Tetrabutylphosphoniumchlorid, Tetrabutylphosphoniumbromid, Tetrabutylphosphoniumiodid, Tetrabutylphosphoniumacetat, Tetrabutylphosphoniumacetat-Essigsäurekomplex, Butyltriphenylphosphoniumtetrabromobisphenat, Butyltriphenylphosphoniumbisphenat, Butyltriphenylphosphoniumbromid und/oder Butyltriphenylphosphoniumbicarbonat.

Bevorzugt wird bei dem erfindungsgemäßen Verfahren eine Dialkylphosphinsäure mit einem Epoxy Novolac bei 95°C bis 160°C für 1 bis 6 Stunden umgesetzt.

Die Erfindung betrifft auch die Verwendung von phosphorhaltigen Flammschutzmittelmischungen nach einem oder mehreren der Ansprüche 1 bis 20 zur Herstellung von Epoxidharzformulierungen.

Die Erfindung betrifft insbesondere flammgeschützte Epoxidharzformulierungen, enthaltend mindestens eine phosphorhaltige Flammschutzmittelmischungen nach einem oder mehreren der Ansprüche 1 bis 20, Epoxidharze, Härter, Beschleuniger, Rheologieadditive und/oder weitere Zusätze.

Bevorzugt handelt es sich bei den weiteren Zusätzen um Lichtschutzmittel, Farbpigmente, Dispergieradditive, Entschäumer, Treibmittel, Schaumbildner, Additive zur Verbesserung der mechanischen Beständigkeit, Additive zur Einstellung der Wärmeleitfähigkeit, Glaskugeln, Glaspulver, Glasfaser, Carbonfaser und/oder Tixotropiermittel.

Die Erfindung betrifft auch ein Verfahren zur Herstellung der vorgenannten Epoxidharzformulierungen, dadurch gekennzeichnet, dass die phosphorhaltigen Flammschutzmittelmischungen nach einem oder mehreren der Ansprüche 1 bis 20 mit Epoxidharz, Härter, Beschleuniger, Rheologieadditiv und ggf. weiteren Zusätzen umgesetzt werden.

Bevorzugt werden beim erfindungsgemäßen Verfahren keine Lösungsmittel eingesetzt.

Schließlich betrifft die Erfindung auch die Verwendung dieser Epoxidharzformulierungen für oder in flammgeschützten Composite-Bauteilen, Klebstoffen, Pasten, Schäumen, Schaummassen, Verschlussmassen, Heißschmelzklebern, Füllern, Vergussmassen, Spachtelmassen, Abschlussmatten, Beschichtungssystemen, Fasern, Prepregs, Lötstopplacken, thermisch leitfähigen Schichten, Wärmeleitpasten, Schockabsorberschichten, LEDs, Sensoren, Isolieranwendungen, Leiterplatten, Antennen sowie in Beschichtungssystemen.

Ganz besonders bevorzugt entsprechen R¹ und R², unabhängig voneinander, Ethyl oder Propyl.

Bei den Flammschutzmittelmischungen den Formeln R²¹-O-(I), R²¹-O-(II) und/oder R²¹-O-(III) weisen die Alkylstrukturen R²¹ bevorzugt 2 bis 8 Kohlenstoffatome auf.

Bei den Verbindungen der Formel (XII) oder (V) beträgt L bevorzugt 0 bis 5.

Bevorzugt bedeutet in Formel (VI)
- U: 1 bis 6
- R³: Wasserstoff, Methyl oder Ethyl
- R⁴: Wasserstoff oder Methyl und
- R⁵: Wasserstoff oder Methyl.

Die Flammschutzmittel mit den funktionellen Gruppen (I), (II) und (III) werden erfindungsgemäß durch Umsetzung mindestens einer Phosphinsäure mit einer monofunktioneller, difunktioneller, multifunktioneller und/oder heterocyclischer Epoxidverbindung hergestellt.

Es können daher verschiedene Typen von Flammschutzmitteln in den erfindungsgemäßen Flammschutzmittelmischungen enthalten sein.

Bevorzugt werden für die Herstellung dieser Flammschutzmittelmischungen Epoxidharze eingesetzt, die ein Epoxy-Äquivalentgewicht (EEW) von weniger als 210 g/mol aufweisen, hierzu gehören bevorzugt Oligomermischungen von Diglycidylether auf Basis von Bisphenol A sowie Novolac-Harze auf Basis des Phenols.

Werden zur Herstellung der erfindungsgemäßen Flammschutzmittelmischungen heterocyclische Epoxidverbindungen eingesetzt, so sind hier Triglycidylisocyanurate besonders geeignet.

Bevorzugt enthalten die erfindungsgemäßen phosphorhaltigen Flammschutzmittelmischungen weniger als 900 ppm Chlor, weniger als 900 ppm Brom und insgesamt weniger als 1500 ppm an Halogenen (in Form von halogenhaltigen Substanzen) und erfüllen damit die Halogenfreiheit nach der Norm IEC 61249-2-21.

In einer anderen bevorzugten Ausführungsform sind die phosphorhaltigen Flammschutzmittelmischungen halogenfrei.

Bevorzugt erfolgt die Synthese der erfindungsgemäßen Flammschutzmittelmischungen unter Ringöffnung von Epoxidgruppen und unter Ausbildung einer kovalenten P-O-C Bindung durch Bildung von Phosphinsäureesterstrukturen des Typs R¹ P(=O)O-CH₂-CH(OH)-CH₂- bzw. des Typs R¹R²P(=O)O-CH(CH₂OH)-CH₂-.

Bevorzugt handelt es sich bei dem Katalysator um Ethyltriphenylphosphoniumiodid, das in Mengen von weniger als 0.1 Gewichtsprozent (%) bezogen auf die Flammschutzmittelmischung eingesetzt wird. Daraus resultiert ein Gesamthalogengehalt von weniger als 1500 ppm.

Bevorzugt wird bei dem erfindungsgemäßen Verfahren eine Dialkylphosphinsäure mit einem Epoxy Novolac bei 120°C bis 150°C für 3 bis 6 Stunden in Gegewart des Katalysators umgesetzt.

Überraschenderweise wurde gemäß der vorliegenden Erfindung gefunden, dass die so modifizierten Epoxidharze, hergestellt aus den Phosphinsäuren (bzw. aus den Phosphinsäuremischungen) und den entsprechenden Epoxidharzen über eine niedrigere Viskosität und somit über verbesserte Verarbeitungsbedingungen verfügen, wenn es gelingt bei der Synthese ein spezielles Isomerenverhältnis der beiden sich bildenden Ester einzustellen. Hierfür ist insbesondere der Katalysator verantwortlich.

Es werden zwei Regio-Isomere bzw. Regioisomerenmischungen der modifizierten Harze erhalten, die sich dadurch auszeichnen, dass die entstehende P-O-C-Phosphinsäureesterstruktur sowohl an der CH₂-Gruppe als auch der CH-Gruppe des Oxiranrings erfolgen kann. Pro Oxirangruppe ist jedoch nur die Umsetzung mit einem Äquivalent der jeweiligen Phosphinsäure möglich.

Überraschenderweise wurde zudem gefunden, dass diese unterschiedlichen (Regio)-Isomere in den modifizierten Epoxidharzen und die sich ausbildenden Mengenanteile über die beiden Reste R¹ und R² an der Phosphinsäure und über den Katalysator gesteuert werden können.

Das Verhältnis der Regioisomere bzw. deren Mischungen hat wiederum entscheidenden Einfluss auf die Viskosität der entstehenden phosphormodifizierten Epoxidharze.

Die erfindungsgemäßen Produkte weisen eine geringe Viskosität auf und führen später im ausgehärteten Composite-Bauteil zu einer Reduzierung des Brandverhaltens, d. h. die Endprodukte sind weniger leicht brennbar. Sie weisen ebenfalls gute Flammschutzmitteleigenschaften und einen hohen Phosphorgehalt auf. Zudem enthalten sie keine P-Dimer-Nebenprodukte, R¹R²P(=O)-O-P(=O)R¹R² die toxisch sind und ein störendes erhöhtes Migrationsverhalten zeigen.

Zudem kann nach dem erfindungsgemäßen Herstellungsverfahren das Isomerenverhältnis mittels Katalysator gesteuert werden und gezielt eine niedrige Viskosität eingestellt werden.

Als besonders geeignet für das erfindungsgemäße Verfahren haben sich die vorgenannten Katalysatoren auf Basis von quaternären Phosphonium-Strukturen gezeigt.

Außerdem kann durch die Wahl eines geeigneten Katalysators eine Reaktion der Epoxidharze untereinander unter Verbrauch von Epoxidgruppen vermieden werden. Die Reaktion der Epoxidharze untereinander hätte einen ungewünschten Viskositätsanstieg zur Folge und zusätzlich wäre durch den Verbrauch der Epoxidgruppen die Aushärtung mit dem Härter negativ beeinflusst (geringere Glasübergangstemperaturen).

Durch die höhere Viskosität müsste dann zudem bei der Verarbeitung ein Lösungsmittel eingesetzt werden oder bei höherer Temperatur gearbeitet werden was einen unnötig hohen Energieaufwand zur Folge hätte.

Der Katalysator reduziert auch den Anteil an möglichen Nebenprodukten, die bei der Reaktion mit den mono- bzw. di-substituierten Phosphinsäuren entstehen können. So wird die Ausbildung entsprechender Dimere reduziert bzw. vermieden, so dass in dem modifizierten Epoxidharz ein höherer Phosphorgehalt resultiert und gleichzeitig eine niedrige Viskosität erhalten wird.

Weiterhin wird durch die Vermeidung von leicht flüchtigen, niedermolekularen, nicht migrationsstabilen dimeren Phosphorkomponenten, die sonst bei solchen Reaktionen entstehen können, im späteren Duroplast-Endprodukt eine Verbesserung der Langzeitstabilität und Oberflächenbeschaffenheit erzielt.

Mit dem erfindungsgemäßen Verfahren können unterschiedliche Phosphorgehalte in den modifizierten Epoxidharzen eingestellt werden, in dem nur ein bestimmter Anteil der Epoxidgruppen durch die Phosphinsäureesterstruktur modifiziert wird und nicht alle Epoxidgruppen umgesetzt werden. Je nach Anzahl der verbleibenden Epoxidgruppen kann so die Vernetzung/Aushärtung günstig beeinflusst werden.

In einem nachgeschalteten Aushärtungsschritt können die so modifizierten Epoxidharze mit niedriger Viskosität mit einem Härter versetzt werden, um Duroplaststrukturen zu erhalten, die sowohl über gute Flammschutzeigenschaften als auch über hohe Glasübergangstemperaturen verfügen.

Dabei können die gängigen Härter wie sie für Epoxidharze bekannt sind, eingesetzt werden. Vorteilhaft ist auch eine Härtung mit Isocyanaten durch Umsetzung der primären und sekundären OH-Gruppen der beiden Regioisomere des modifizierten Epoxidharzes.

Durch die niedrigere Viskosität können diese Bauteile ohne den Einsatz von Lösungsmitteln gefertigt werden und es sind keine höheren Verarbeitungstemperaturen notwendig, um die Viskosität zu reduzieren. Somit ist eine Fertigung der entsprechenden Produkte unter Schonung von Ressourcen, Zeit und Energie möglich.

Die erfindungsgemäß modifizierten Epoxidharze können als alleinige Epoxidharzkomponente oder zusammen mit anderen Epoxidharzen oder in Abmischung mit anderen Harzen und/oder Füllstoffen eingesetzt werden. Zu den anderen Harzen zählen bevorzugt Phenolharze, Benzoxazine, Cyanatester und Polyole wie sie in der Polyurethan-Chemie eingesetzt werden

Durch die geringere Viskosität der erfindungsgemäß modifizierten Epoxidharze ist auch die Einarbeitung weiterer Füllstoffe, die ansonsten mit einem Anstieg der Viskosität verbunden ist, ohne Probleme möglich. Die maximale Viskosität bei der die Bauteile hergestellt werden können, kann so mit einem höheren Füllstoffgehalt realisiert werden.

Werden Bauteile mit Verstärkungsfasern gefertigt, ist durch die reduzierte Viskosität eine bessere Faserbenetzung zu realisieren. Hierdurch verbessern sich die mechanischen Eigenschaften des Bauteils.

Die erfindungsgemäß modifizierten Epoxidharze sind besonders gut für moderne Herstelltechniken wie die Resin Transfer Molding (RTM) Technik, die Liquid Compression Molding (LCM) Technik und andere Infusionstechniken geeignet, die eine bei Verarbeitungstemperatur niedrige Viskosität der Harzformulierung benötigen.

Zur Phosphormodifizierung mit den mono- und di-substituierten Phosphinsäuren des Typs R¹ R²P(=O)OH eignen sich Epoxidharze der folgenden Formel (XVI) 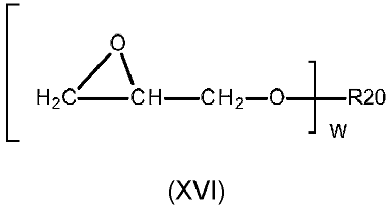 in der R²⁰ eine substituierte oder nicht substituierte aromatische, aliphatische, cycloaliphatische oder heterocyclische Gruppe und W 1 bis 14 bedeutet.

Bevorzugt bedeutet W 1 bis 6.

In der Formel (XVI) kann der Rest R²⁰ aus folgenden Gruppen entstammen: Resorcinol, Catechol, Hydroquinone, Bisphenol, Bisphenol-A, Bisphenol-F, Bisphenol-K, Phenol-Formaldehyd Novolac Harz, Alkyl-substituierte Phenol-Formaldehyd Harze, Phenol-Hydroxybenzaldehyd Harze, Kresol-Hydroxybenzaldehyd Harze, Dicyclopentadienphenol Harze, Dicyclopentadiensubstituierte Phenol Harze, Tetramethylbiphenol-Harze und/oder Kombinationen davon.

Besonders geeignet zur Synthese der erfindungsgemäßen phosphormodifizierten Epoxidharzformulierungen sind Epoxidharze mit mindestens einer Epoxidstruktur.

Besonders bevorzugt sind auch Epoxidharze mit mehreren Epoxidstrukturen.

Besonders geeignet sind Epoxy-Novolac-Harze, bevorzugt sind dabei Epoxy-Novolac-Harze auf Basis des Phenols und Kresols sowie epoxidierte Bisphenol-A Harze oder epoxidierte Bisphenol-F Harze.

Beispiele für mögliche monofunktionelle, difunktionelle oder multifunktionelle Epoxidharze, die sich zur Herstellung der phosphorhaltigen Flammschutzmittel eignen, sind: Diglycidylether von Bisphenol-A mit einem Epoxyäquivalent (EEW) zwischen 177 und 189 wie sie z.B. von Dow (Olin) unter dem Markennamen DER^{®} 330 erhältlich sind, sowie cycloaliphatische Epoxide und Copolymere von Glycidylmethacrylat-Ethern und Styrol.

Bevorzugte Polyepoxide sind Epoxy Novolac Harze wie D.E.N.^{®} 438 oder D.E.N.^{®} 439 (ehemals Dow / Olin), Kresol Epoxy Novolac Harze, Triepoxy Verbindungen wie Tactix^{®} 742, epoxidierte Bisphenol-A Novolac Harze, Dicyclopentadiene-Phenol-Epoxy- Novolac Harze; Glycidylether des Tetraphenolethans; Diglycidylether von Bisphenol-A; Diglycidylether des Bisphenol-F und Diglycidylether des Hydrochinons.

Aromatische Polyglycidylether, wie Bisphenol-A-diglycidylether, Bisphenol-F-diglycidylether und Bisphenol-S-diglycidylether, Polyglycidylether von Phenol/Formaldehyd- und Kresol/Formaldehyd-Harzen, Resorcindiglycidylether, Mono- und Di-Glycidylether von Polypropylenoxiden undvon Polyethylenoxiden, Tetrakis(p-glycidylphenyl)-ethan, Di- bzw. Polyglycidylester von Phthal-, Isophthal- und Terephthalsäure sowie von Trimellithsäure,

Verwendbar sind auch stickstoffhaltige Epoxidstrukturen, die am Stickstoff eine oder zwei Epoxidgruppen tragen. Hierbei kann der epoxidgruppentragende Stickstoff auch mehrfach im Ausgangsmaterial vorkommen. Der Stickstoff selbst kann auch Teil einer heterocyclischen Struktur sein wie etwa beim Triglycidylisocyanurat.

Es können auch Hydantoin-Epoxidharze und Uracil- Epoxidharze eingesetzt werden.

Geeignete weitere Epoxidverbindungen, die sich für die Herstellung des erfindungsgemäßen phosphorhaltigen Flammschutzmittels eignen sind tert.-Butanolglycidylether, Trimethylolpropantriglycidylether, Di- und Polyglycidylverbindungen von mehrwertigen aliphatischen Alkoholen, wie 1,4-Butandiol; oxazolidinonmodifizierte Epoxidharze; Harze vom Typ Bisphenol S wie
z. B. BPS^{®}-200 von Nippon Kayaku Co., Ltd, EPX^{®}-30 von ACR Co.,
Epiculon^{®} EXA-1514 von Dainippon Ink & Chemicals Inc; Bisphenol A Harze wie Epiclon^{®} N-3050, N-7050, N-9050 von Dainippon Ink & Chemicals., XAC^{®}-5005, GT^{®}-7004, 6484T, 6099 von Huntsman; Bisphenol F Harze wie z. B. YDF^{®}-2004, YDF^{®}2007 von Tohto Kasei Co.,
heterocyclische Epoxidharze wie z. B. TEPIC^{®} von Nissan Chemical Industries, Ltd., Araldite^{®} PT 810 von Huntsman, epoxidierte Novolake wie EPPN^{®}-201, EOCN^{®}-103, EOCN^{®}-1020, EOCN^{®}-1025 hergestellt von Nippon Kayaku Co., Ltd, ECN^{®} 278, ECN^{®}-292 und ECN^{®} 299 von Asahi Chemical Industry Co., Ltd., GY^{®}-1180, ECN^{®}-1273 und ECN^{®}-1299 von CIBA GEIGY AG, YDCN^{®}-220L, YDCN^{®}-220HH, YDCN^{®}-702, YDCN-704, YDPN-601 und YPDN-602 von Tohto Kasei Co., Epiclon^{®} 673, N^{®}-680, N^{®}-695, N^{®}-770 und N^{®}-775 hergestellt von Dainippon Ink & Chemicals Inc.,
aminofunktionelle Epoxidharze wie z. B. YH^{®}-1402 und ST^{®}-110 von Tohto Kasei Co., YL^{®}-931 und YL^{®}-933 von Yuka Shell Co., kautschukmodifizierte Epoxidharze wie Epiclon^{®} TSR-601 von Dainippon Ink & Chemicals Inc., EPX^{®}-84-2 und EPX^{®}4061, Naphthalinhaltige Epoxidstrukturen wie z. B. von Dainippon Ink & Chemicals Inc. Epiclon^{®} HP-4710, HP-7250 und HP-9500, siliconmodifizierte Epoxidharze wie z. B. 1359 von Asahi Denka Kogyo K.K. und andere Epoxidharze.

Das entsprechende Epoxyäquivalentgewicht (EEW) dieser phosphormodifizierten Harze bzw. Harzabmischungen kann bis zu 8000 g/mol betragen. Gut geeignet sind Strukturen mit einem EEW von 200 g/mol bis 4000 g/mol und bevorzugt solche mit einem EEW von 480 bis 3500 g/mol.

Zur Herstellung der erfindungsgemäßen phosphormodifizierten Epoxidharze sind insbesondere Bisphenol, Bisphenol A, Bisphenol AP, Bisphenol B, Bisphenol BP, Bisphenol C, Bisphenol E, Bisphenol F, Bisphenol FL, Bisphenol G, Bisphenol M, Bisphenol P, Bisphenol PH, Bisphenol S, Bisphenol TMC, Bisphenol Z und/oder Bisphenol K geeignet.

Besonders geeignet sind Diglycidylether auf Basis von Bisphenol A mit einem Epoxy Äquivalentgewicht von < 210 g/mol (EEW < 210 g/mol).

Für die vorliegende Erfindung können eine Reihe von Säuren, Aminen, Imidazolen und quaternären Phosphoniumsalze als Katalysator eingesetzt werden. Besonders geeignet sind Katalysatoren auf Basis quaternarärer Phosphonium- und Ammonium-Verbindungen wie zum Beispiel Ethyltriphenylphosphoniumchlorid, Ethyltriphenylphosphoniumbromid, Ethyltriphenylphosphoniumiodid, Ethyltriphenylphosphoniumacetat, Ethyltriphenylphosphoniumphosphat, Tetrabutylphosphoniumchlorid, Tetrabutylphosphoniumbromid, Tetrabutylphosphoniumiodid, Tetrabutylphosphoniumacetat, Tetrabutylphosphoniumacetat-Essigsäurekomplexe, Butyltriphenylphosphoniumtetrabromobisphenat, Butyltriphenylphosphoniumbisphenat, Butyltriphenylphosphoniumbromid, Butyltriphenylphosphoniumbicarbonat, Benzyltrimethylammoniumchlorid, Tetramethylammoniumhydroxid, Butyltriphenylphosphoniumchlorid, Ethyltriphenylphosphonium-Acetat, Ethyltriphenylphosphoniumbromid, Ethyltriphenylphosphoniumiodid, Methyltriphenylphosphoniumbromid, Tetrabutylammoniumbromid, Tetrapropylammoniumbromid, Tetraphenylphosphoniumbromid und entsprechende Mischungen davon.

Die nach dem erfindungsgemäßen Verfahren hergestellten Flammschutzmittel weisen eine enge Molekulargewichtsverteilung auf, da der eingesetzte Katalysator Nebenreaktionen unterdrückt und die Bildung von phosphorhaltigen Dimeren (wie etwa Andydride) verhindert.

Den phosphormodifizierten Epoxidharzen können weitere Füllstoffe und Polymere zugegeben werden um die gewünschten Eigenschaften in der Endanwendung zu optimieren. Hier sind insbesondere Epoxidharze, Flammschutzmittel und Additive zur Verbesserung der mechanischen Beständigkeit ("Toughener") zu nennen. Letztere können Verbindungen aus der Gruppe der thermoplastischen Polymere, Elastomere oder ein Core-Shell Rubber sein.

Die Erfindung wird durch die nachstehenden Beispiele erläutert.

**Tabelle 1: Eingesetzte Komponenten**

| Abkürzung | Material | Produktname | Hersteller / Lieferant |
|---|---|---|---|
| EPN | Epoxy Novolac Harz | DEN^{®} 438 | Olin (Deutschland) |
| DGEBA | Diglycidylether-Bisphenol-A-Harz | Beckopox^{®} EP 140 | Allnex (Deutschland) |
| TGIC | Triglycidylisocyanurat | -- | Sigma-Aldrich |
| t-BuGE | tert.-Butylglycidylether | -- | Aldrich-Aldrich |
| BuDGE | Butandioldiglycidylether | -- | Sigma-Aldrich |
| ETPPI | Ethyltriphenylphosphoniumiodid | -- | Sigma-Aldrich |
| DEPS | Diethylphosphinsäure | -- | Clariant |
| DPPS | Diphenylphosphinsäure | -- | Clariant |
| EPPS | Ethylphenylphosphinsäure | -- | Clariant |
| DICY | Dicyandiamid | Dyhard^{®} 100S | Alzchem (Deutschland) |
| TETA | Triethylentetraamin | -- | Sigma-Aldrich |
| DOPO Harz | DOPO-modifiziertes Epoxidharz | Struktol^{®} VP 3735 | Schill-Seilacher (Deutschland) |

| | | | |
|---|---|---|---|
| -- = ohne Handelsnamen | | | |

**Tabelle 2: Analytische Methoden**

| Parameter | Einheit | Verfahren |
|---|---|---|
| Epoxyäquivalent (EEW) | g/mol | DIN 16945: 1989-03 |
| Phosphor, gesamt | m% (Massenprozent) | Photometrie ISO 13730 nach Aufschluss |
| NMR | ppm | ³¹P-NMR, ¹H-NMR |
| Viskosität | mPas | Rheometer (interne Methode) |
| Isomerenverhältnis (I)/(II) | % | ³¹P-NMR, ¹H-NMR (Integrale) |
| Anteile | Jeweils mol% | Epoxyäquivalent und NMR |
| X von Struktur (I) | | |
| Y von Struktur (II) | | |
| Z von Struktur (III) | | |
| P-Dimer | ja / nein | ³¹P-NMR |

**Tabelle 3: Abkürzungen**

| |
|---|
| Kat1: Ethyltriphenylphosphoniumiodid |
| Kat2: Methyltriphenylphosphoniumiodid |
| P-1: Diethylphosphinsäure |
| |
| P-2: Methyethylphosphinsäure |

Die Analyse des Isomerenverhältnisses von (I) zu (II) efolgt mittels ³¹P-NMR und ¹H-NMR Spektroskopie. Das Epoxyäquivalent führt zu einer Aussage über den Anteil der verbliebenen Epoxidgruppen. Aus der Kombination der NMR Ergebnisse und des Epoxidäquivalents können X, Y und Z bestimmt werden.

### Beispiele 1 bis 4: Zweifachfunktioneller Epoxidharze

### Beispiel 1:

In einer Kolbenapparatur mit Rührer, Rückflusskühler, Tropftrichter, Thermometer und Stickstoffzuleitung werden 802 g DGEBA vorgelegt und auf 130°C aufgeheizt. Dann werden 0,1 m% (Massenprozent bezogen auf Gesamtmasse aus DEPS und DGEBA) ETPPI zugegeben und danach 258 g DEPS wobei eine exotherme Reaktion beobachtet wird. Anschließend wird noch 2 h gerührt und das erhaltene Epoxidharz heiß ausgegossen.

### Beispiel 2 (Vergleich)

Es wird analog zu Beispiel 1 umgesetzt, jedoch ohne Ethyltriphenlyphosphoniumiodid als Katalsator.

### Beispiel 3

Analog Beispiel 1 werden 1000 g DGEBA vorgelegt und auf 130°C aufgeheizt, danach 0,1 m% Ethyltriphenlyphosphoniumiodid zugegeben und anschließend 642 g Diethylphosphinsäure wobei eine exotherme Reaktion zu beobachten ist. Dann wird noch 2 h gerührt und das entstandene Epoxidharz heiß ausgegossen.

### Beispiel 4 (Vergleich)

Es wird analog zu Beispiel 3 umgesetzt, jedoch ohne Ethyltriphenlyphosphoniumiodid als Katalsator.

| | Beispiel 1 | Beispiel 2 (Vergleich) | Beispiel 3 | Beispiel 4 (Vergleich) |
|---|---|---|---|---|
| DGEBA (g) | 802 | 802 | 1000 | 1000 |
| Kat 1 | ja | nein | ja | nein |
| P1 (g) | 258 | 258 | 642 | 642 |
| m % P | 6,2 | 6,2 | 9,7 | 9,7 |
| EEW (g/mol) | 482 | 700 | 6.000 | 7.000 |
| 31P-NMR | 61,1 ppm (I); | 61,3 ppm (I); | 61,1 ppm (I); | 61,3 ppm (I); |
| (DMSO, entkoppelt) | 61,7 ppm (II) | 61,8 ppm (II) | 61,7 ppm (II) | 61,8 ppm (II) |
| Viskosität (bei 80°C, 5s⁻¹) | 3450 | 5800 | 16.200 | 16.600 |
| Isomerenverhältnis I/II (aus 31 P-NMR) | 70/30 | 90/10 | 72/28 | 86/14 |
| X | 35 | 59 | 68 | 82 |
| Y | 15 | 7 | 26 | 13 |
| Z | 50 | 34 | 6 | 5 |
| T = Y / (X+Y) ^{∗}100% | 30 % | 10 % | 28% | 14% |
| P-Dimer Nebenprodukt | nein | ja | nein | ja |

Nach den Beispielen 1 und 3 weisen die erfindungsgemäßen Produkte jeweils einen höheren Anteil an Isomer II auf. Der höhere Anteil an II ist am Wert T , der das Verhältnis von Y zu (X+Y) angibt, zu erkennen. Das erfindungsgemäße Produkt weist daher jeweils eine niedrigere Viskosität als das Produkt des jeweiligen Vergleichsbeispiels auf.

Vorteilhafterweise enthalten die erfindungsgemäßen Produkte zusätzlich keine phosphorhaltigen dimere Nebenprodukte, die durch negative Eigenschaften wie erhöhtes Migrationsverhalten und Toxizität das Endprodukt unbrauchbar machen würden.

### Beispiele 5 bis 15: Umsetzung von mehrfachfunktionellen Epoxiden

### Beispiel 5

In einer 2000 mL-Fünfhalskolbenapparatur mit Rührer, Rückflusskühler, Tropftrichter, Thermometer und Stickstoffzuleitung werden 1000 g Epoxy Novolac (DEN^{®} 438 mit einem EEW von 180 g/mol) vorgelegt und auf 130°C aufgeheizt. Dann werden 0,1 m% Ethyltriphenlyphosphoniumiodid (bezogen auf Gesamtmasse) zugegeben, danach 73 g Diethylphosphinsäure. Anschließend wird noch 120 min gerührt und das hergestellte Epxidharz heiß ausgegossen.

Beispiele 6 bis 9 werden ausgeführt wie Beispiel 5, aber es werden jeweils die Mengen an Diethylphosphinsäure wie in Tabelle 2 wiedergegeben eingesetzt.

### Beispiel 10

Die Herstellung erfolgt wie in Beispiel 8, aber mit Methyltriphenylphosphoniumiodid anstatt Ethyltriphenlyphosphoniumiodid als Katalysator.

### Beispiel 11

Die Herstellung erfolgt wie in Beispiel 8, aber mit 286 g Ethyl-Methylphosphinsäure anstatt Diethylphosphinsäure.

### Beispiel 12 (Vergleich)

Die Herstellung erfolgt wie in Beispiel 6, aber es wurde kein Katalysator eingesetzt.

### Beispiel 13 (Vergleich)

Die Herstellung erfolgt wie in Beispiel 8, aber es wurde kein Katalysator eingesetzt.

### Beispiel 14 (Vergleich)

Die Herstellung erfolgt wie in Beispiel 9, aber es wurde kein Katalysator eingesetzt.

**Tabelle 2: Erfindungsgemäße Beispiele 5 bis 11 und Vergleichsbeispiele 12 bis 15**

| Beispiel | 5 | 6 | 7 | 8 | 9 | 10 | 11 | 12 (Vergl.) | 13 (Vergl.) | 14 (Vergl.) | 15 (Vergl.) |
|---|---|---|---|---|---|---|---|---|---|---|---|
| Epoxy Novolac (g) | 1000 | 1000 | 1000 | 1000 | 1000 | 1000 | 1000 | 1000 | 1000 | 1000 | 1000 |
| Kat 1 | ja | ja | ja | Ja | ja | | ja | nein | nein | nein | nein |
| Kat 2 | | | | | | ja | | | | | |
| P-1 (Diethyl) | 73 | 155 | 210 | 335 | 568 | 335 | | 155 | 335 | 568 | 0 |
| P-2 (MeEt) | | | | | | | 286 | | | | |
| m % P | 1,7 | 3,4 | 4,2 | 6,4 | 9,2 | 6,4 | 6,4 | 3,2 | 6,4 | 9,2 | 0 |
| EEW (g/mol) | 225 | 273 | 328 | 496 | 2700 | 491 | 503 | 332 | 605 | ca. 4000 | 181 |
| Viskosität (Pas @ 80°C, 5 s⁻¹) | 11 | 20 | 26 | 36 | 134 | 30 | 39 | 29 | 48 | 165 | 2 |
| Isomeren-Verhältnis I/II | 62 / 38 | 67 / 33 | 59 / 41 | 69 / 31 | 70 / 30 | 75 / 25 | 69 / 31 | 95 / 5 | 93 / 7 | 92 / 8 | -- |
| X | 9 | 16 | 20 | 36 | 61 | 38 | 37 | 36 | 58 | 83 | 0 |
| Y | 5 | 8 | 14 | 16 | 26 | 13 | 17 | 2 | 2 | 8 | 0 |
| Z | 86 | 76 | 66 | 48 | 13 | 49 | 46 | 62 | 40 | 9 | 100 |
| T | 36% | 33% | 41% | 31% | 30% | 25% | 31% | 5% | 3% | 9% | --- |
| P-Dimer | nein | nein | nein | nein | nein | nein | nein | ja | ja | ja | nein |

Der obigen Tabelle ist zu entnehmen, dass die erfindungsgemäß hergestellten Epoxidharze der Beispiele 5 bis 11 jeweils einen höheren Anteil an Isomer II im Vergleich zu den Produkten der jeweiligen Vergleichsbeispiele 12 bis 15 bei vergleichbarem Phosphorgehalt aufweisen.

Die erfindungsgemäßen Produkte weisen außerdem jeweils eine niedrigere Viskosität als das Produkt des jeweiligen Vergleichsbeispiels bei vergleichbarem Phosphorgehalt auf, so dass mit den erfindungsgemäßen Produkten die lösungsmittelfreie Verarbeitung einfach möglich bzw. überhaupt möglich ist. Vorteilhafterweise enthalten die erfindungsgemäßen Produkte keine phosphorhaltigen dimeren Nebenprodukte, die durch negative Eigenschaften wie erhöhtes Migrationsverhalten und Toxizität die Endprodukte unbrauchbar machen würden.

### Erfindungsgemäße Beispiele 16 bis 19

### Beispiel 16 (mit monofunktionellem Epoxid)

In einem Reaktionskolben mit Rührer, Rückflusskühler, Tropftrichter, Thermometer wird unter Stickstoffatmosphäre 100,0 g tert.-Butylglycidylether und 0,1 m% Ethytriphenylphosphoniumidid (bezogen auf Gesamtgehalt) vorgelegt und auf 120°C erwärmt, dann werden 91,8 g Diethylphosphinsäure langsam zugetropft und für 30 Minuten nachgerührt. Es resultiert ein flüssiges, farbloses Produkt.

### Beispiel 17 (mit einem trifunktionellen heterocyclischen und stickstoffhaltigen Epoxid)

In einem Glaskolben mit Rückflusskühler, Thermoelement, Stickstoffzuleitung und Rührer werden 100,0 g Triglycidylisocyanurat (TGIC) vorgelegt und aufgeschmolzen. Anschließend werden 0,1 m% Ethyltriphenylphosphoniumjodid (bezogen auf Gesamtgehalt) zudosiert und gerührt, die Temperatur im Kolben auf 130°C erhöht und 41,0 g Diethylphosphinsäure unter Rühren und Stickstoffdurchfluss langsam zudosiert,. und für 30 min auf 130°C gehalten. Das Produkt wird anschließend warm ausgegossen und abgekühlt.

### Beispiel 18 (mit einem trifunktionellen heterocyclischen und stickstoffhaltigem Epoxid)

Es wird vorgegangen wie in Beispiel 17, allerdings werden 123,0 g (anstatt 41,0 g) Diethylphosphinsäure umgesetzt.

### Beispiel 19 (difunktionelles Epoxid: Butandioldiglycidylether)

In einem Glaskolben mit Thermometer, Stickstoffzuleitung, Tropftrichter, Kühler und Rührer werden 100,0 g Butandioldiglycidylether vorgelegt und 0,1 m% Etyltriphenylphosphoniumiodid (bezogen auf Gesamtgehalt) zudosiert und gerührt. Bei einer Temperatur von 130°C werden nun 120,8 g Diethylphosphinsäure zugetropft. Nach 30 min Nachreaktionszeit wird das gut fließfähige, transparente Produkt abgekühlt und abgefüllt

### Beispiel 20 (Vergleich, difunktionelles Epoxid: Butandioldiglycidylether)

In einem Glaskolben mit Thermometer, Stickstoffzuleitung, Tropftrichter, Kühler und Rührer werden 100,0 g Butandioldiglycidylether vorgelegt und gerührt. Bei einer Temperatur von 130°C werden 120,8 g Diethylphosphinsäure zugetropft. Nach 30 min Nachreaktionszeit wird das Produkt abgekühlt und abgefüllt.

**Tabelle 3: Beispiele 16 bis 19 und Beispiel 20 (Vergleich)**

| Beispiel | 16 | 17 | 18 | 19 | 20 (Vergl.) |
|---|---|---|---|---|---|
| tert.- Butylglycidylether (g) | 100 | | | | |
| TGIC (g) | | 100 | 100 | | |
| Butandioldiglycidylether (g) | | | | 100 | 100 |
| Kat 1 | ja | ja | ja | ja | nein |
| P-1 (Diethylphosphinsäure) (g) | 91,8 | 41,0 | 123 | 120,8 | 120,8 |

| m % P | 11,5 | 7,6 | 14 | 13,9 | 13,9 |
|---|---|---|---|---|---|
| 31P-NMR | 60,7 ppm (Isomer I); 60,6 ppm (Isomer II) | 60,9 ppm (Isomer I); 61,1 ppm (Isomer II) | 60,9 ppm (Isomer I); 61,1 ppm (Isomer II) | 60,9 ppm (Isomer I); 61,2 ppm (Isomer II) | 60,9 ppm (Isomer I); 61,2 ppm (Isomer II) |
| EEW (g/mol) | ca. 2000 | 221 | ca. 5000 | ca. 2500 | ca. 4900 |
| Viskosität (mPas @ 80°C, 5s-1) | 20 | 11000 | 7500 | 120 | 255 |
| Isomerenverhältnis A/B (aus 31P-NMR) | 64/36 | 67/33 | 66/34 | 63/37 | 82/18 |
| X | 58 | 25 | 61 | 57 | 78 |
| Y | 33 | 12 | 31 | 34 | 17 |
| Z | 9 | 63 | 7 | 9 | 5 |
| T = Y/(X+Y)^{∗}100% | 36% | 33% | 34% | 37% | 18% |
| phosphorhaltiges dimeres Nebenprodukt | nein | nein | nein | nein | Ja |

Die Beispiele in obiger Tabelle zeigen für die erfindungsgemäßen Produkte 16 bis 19 jeweils einen höheren Anteil an Isomer II im Vergleich zum Produkt aus Vergleichsbeispiel 20.

Das erfindungsgemäße Produkt 19 weist außerdem jeweils eine niedrigere Viskosität als das Produkt des Vergleichsbeispiels 20 auf, so dass eine lösungsmittelfreie Verarbeitung erleichtert wird.

## Patentansprüche

1. Phosphorhaltige Flammschutzmittelmischungen, enthaltend einzelne Flammschutzmittel mit jeweils einer oder mehreren funktionellen Gruppen der Formeln (I), (II) und (III), 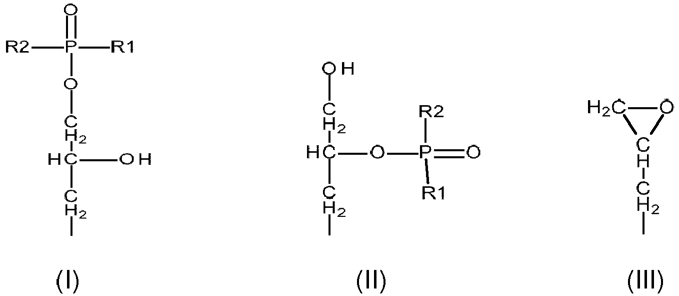 wobei, bezogen auf die Gesamtmenge an funktionellen Gruppen in der Flammschutzmittelmischung, 1 bis 98 mol-% funktionelle Gruppen der Formel (I), 1 bis 35 mol-% funktionelle Gruppen der Formel (II) und 1 bis 98 mol-% funktionelle Gruppen der Formel (III) enthalten sind, und wobei R¹ und R² gleich oder verschieden sind und unabhängig voneinander, Wasserstoff, C₁- bis C₁₂-Alkyl, linear oder verzweigt und/oder C₆- bis C₁₈-Aryl bedeuten und die Summe von (I), (II) und (III) immer 100 mol-% beträgt.

2. Phosphorhaltige Flammschutzmittelmischungen nach Anspruch 1, **dadurch gekennzeichnet, dass** R¹ und R² gleich oder verschieden sind und unabhängig voneinander Wasserstoff, Methyl, Ethyl, n-Propyl, iso-Propyl, n-Butyl, iso-Butyl, sec-Butyl, tert- Butyl, n-Pentyl, 2-Methylbutyl, 3-Methylbutyl, 3-Methylbut-2-yl, 2-Methylbut-2-yl, 2,2-Dimethylpropyl, Hexyl, Heptyl, Octyl, Nonyl, Decyl, Cyclopentyl, Cyclopentylethyl, Cyclohexyl, Cyclohexylethyl und/oder Phenyl bedeuten.

3. Phosphorhaltige Flammschutzmittelmischungen nach Anspruch 1 oder 2, **dadurch gekennzeichnet, dass** R¹ und R² gleich oder verschieden sind und unabhängig voneinander Methyl, Ethyl, n-Propyl, iso-Propyl, n-Butyl, iso-Butyl, sec-Butyl und/oder tert-Butyl bedeuten.

4. Phosphorhaltige Flammschutzmittelmischungen nach mindestens einem der Ansprüche 1 bis 3, **dadurch gekennzeichnet, dass** sie
5 bis 94 mol-% an Formel (I),
3 bis 35 mol-% an Formel (II) und
3 bis 92 mol-% an Formel (III) enthalten wobei die Summe von (I), (II) und (III) immer 100 mol-% beträgt.

5. Phosphorhaltige Flammschutzmittelmischungen nach mindestens einem der Ansprüche 1 bis 4, dadurch gekenzeichnet, dass sie
25 bis 90 mol-% an Formel (I),
5 bis 30 mol-% an Formel (II) und
5 bis 70% mol-% an Formel (III) enthalten wobei die Summe von (I), (II) und (III) immer 100 mol-% beträgt.

6. Phosphorhaltige Flammschutzmittelmischungen nach mindestens einem der Ansprüche 1 bis 5, **dadurch gekennzeichnet, dass** im Gemisch der Formeln (I) und (II) sich der Anteil T (in mol-%) an Formel (II) nach T = [y/(x+y)] ^{∗} 100% ergibt mit der Maßgabe dass x die Menge an Formel (I) und y die Menge an Formel (II), jeweils in mol-%, darstellt.

7. Phosphorhaltige Flammschutzmittelmischungen nach mindestens einem der Ansprüche 1 bis 6, **dadurch gekennzeichnet, dass** T 10 bis 70 mol-% beträgt.

8. Phosphorhaltige Flammschutzmittelmischungen nach mindestens einem der Ansprüche 6 bis 7 **dadurch gekennzeichnet, dass** T 20 bis 45 mol-% beträgt.

9. Phosphorhaltige Flammschutzmittelmischungen nach mindestens einem der Ansprüche 1 bis 8, **dadurch gekennzeichnet, dass** die einzelnen Flammschutzmittel mit den funktionellen Gruppen (I), (II) und (III) in den Flammschutzmittelmischungen den Formeln R²¹-O-(I), R²¹-O-(II) und/oder R^{21 -}0-(111) entsprechen, wobei es sich bei R²¹ um lineare oder verzweigte Alkylstrukturen mit 2 bis 8 Kohlenstoffatomen und/oder um Polypropylenoxide des Typs -[-CH(CH₃)-CH₂-O-]ₖ-H oder -[-CH₂-CH(CH₃)-O-]ₖ-H und/oder um Polyethylenoxide des Typs -[-CH₂-CH₂-O-]ₖ-H handelt wobei k jeweils eine ganze Zahl von 1 bis 12 bedeutet.

10. Phosphorhaltige Flammschutzmittelmischungen nach mindestens einem der Ansprüche 1 bis 8 **dadurch gekennzeichnet, dass** die einzelnen Flammschutzmittel mit den funktionellen Gruppen (I), (II) und (III) in den Flammschutzmittelmischungen der Formel D-O-[-CH₂-CH₂-O-]ᵣ-E und/oder D-O-[-CH(CH₃)-CH₂-O-]ᵣ-E entsprechen, wobei D und E gleich oder verschieden sein können und jeweils für die Formel (I), (II) und/oder (III) stehen und r eine ganze Zahl von 1 bis 12 bedeutet.

11. Phosphorhaltige Flammschutzmittelmischungen nach mindestens einem der Ansprüche 1 bis 8, **dadurch gekennzeichnet, dass** die einzelnen Flammschutzmittel mit den funktionellen Gruppen (I), (II) und (III) in den Flammschutzmittelmischungen der Formel (IV)
E-Q-D (IV)
entsprechen, wobei Q für die nachfolgende Formel (V) steht 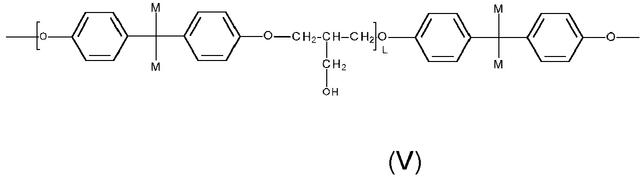 in der M Wasserstoff oder Methyl bedeutet und wobei D und E gleich oder verschieden sein können und jeweils für die Formeln (I), (II) und/oder (III) stehen und L eine ganze Zahl von 0 bis 5 bedeutet.

12. Phosphorhaltige Flammschutzmittelmischungen nach mindestens einem der Ansprüche 1 bis 8, **dadurch gekennzeichnet, dass** die einzelnen Flammschutzmittel mit den funktionellen Gruppen (I), (II) und (III) in den Flammschutzmittelmischungen der Formel (VI) 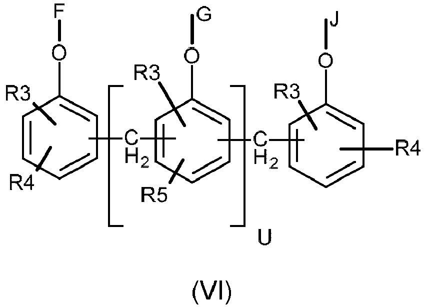 entsprechen, wobei F, G und J gleich oder verschieden sein können und jeweils für die Formeln (I), (II) und/oder (III) stehen, U eine ganzzahlige Zahl zwischen 1 und 12 bedeutet, R³ Wasserstoff, Methyl, Ethyl, Propyl und/oder Butyl bedeutet sowie R⁴ und R⁵ unabhängig voneinander Wasserstoff, Methyl und/oder 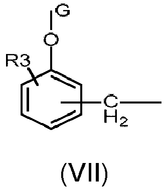 bedeuten wobei G und R³ wie zuvor definiert sind.

13. Phosphorhaltige Flammschutzmittelmischungen nach mindestens einem der Ansprüche 1 bis 8, **dadurch gekennzeichnet, dass** die einzelnen Flammschutzmittel mit den funktionellen Gruppen (I), (II) und (III) in den Flammschutzmittelmischungen der Formel (VIII) 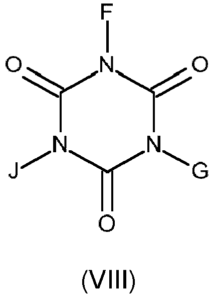 entsprechen, wobei F, G und J gleich oder verschieden sein können und jeweils für die Formeln (I), (II) und/oder (III) stehen

14. Phosphorhaltige Flammschutzmittelmischungen enthaltend Flammschutzmittel mit jeweils einer oder mehreren funktionellen Gruppen der Formeln (I), (II) und (III), 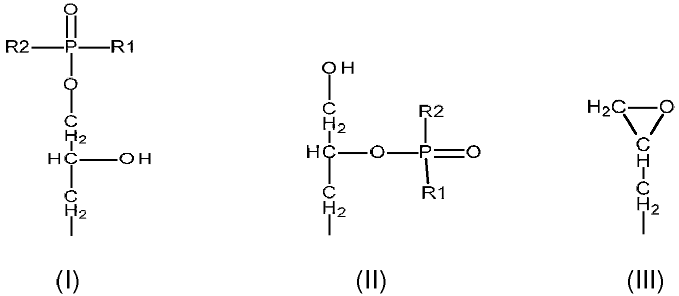 wobei und R¹ und R² gleich oder verschieden sind und unabhängig voneinander, Wasserstoff, C₁- bis C₁₂-Alkyl, linear oder verzweigt und/oder C₆- bis C₁₈-Aryl bedeuten, **dadurch gekennzeichnet, dass** die Flammschutzmittel durch Umsetzung mindestens einer Phosphinsäure mit einer monofunktioneller, difunktioneller, multifunktioneller und/oder heterocyclischer Epoxidverbindung hergestellt wurden.

15. Phosphorhaltige Flammschutzmittelmischungen nach Anspruch 14, **dadurch gekennzeichnet, dass** für die Herstellung dieser Flammschutzmittelmischungen mindestens eine monofunktionelle Epoxidverbindung aus der Gruppe der Glycidylether des Polyethylenoxids (IX) 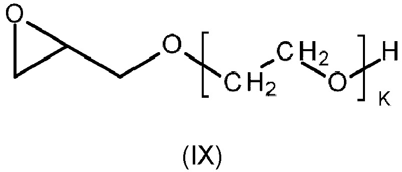 oder des Polypropylenoxids (X), (XI) 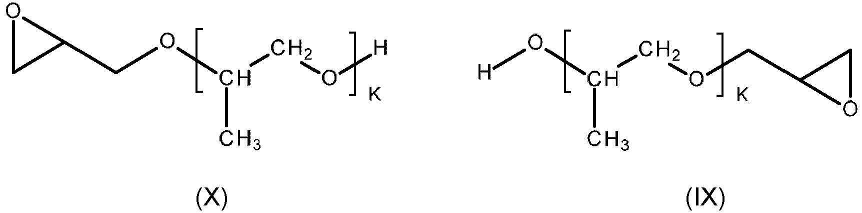 oder aus der Gruppe der Glycidylverbindungen eines linearen oder verzweigten aliphatischen Mono-Alkohols mit 2 bis 8 Kohlenstoffatomen verwendet wird, wobei K eine ganzzahlige Zahl von 1 bis 12 bedeutet.

16. Phosphorhaltige Flammschutzmittelmischungen nach Anspruch 14, **dadurch gekennzeichnet, dass** für die Herstellung dieser Flammschutzmittelmischungen eine difunktionelle Epoxidverbindung aus der Gruppe der Diglycidylether des Bisphenol A, des Bisphenol F und/oder des Bisphenol A/F der Formel (XII) 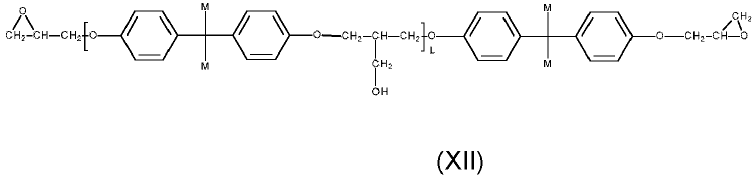 verwendet wird, wobei M Wasserstoff und/oder Methyl und L eine ganzzahlige Zahl von 0 bis 5 bedeutet.

17. Phosphorhaltige Flammschutzmittelmischungen nach Anspruch 14, **dadurch gekennzeichnet, dass** für die Herstellung dieser Flammschutzmittelmischungen mindestens eine difunkionelle Epoxidverbindung aus der Gruppe der Diglycidylverbindung des Polypropylenoxids (XIII) 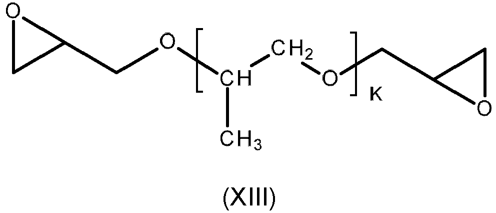 oder des Polyethylenoxids (XIV) 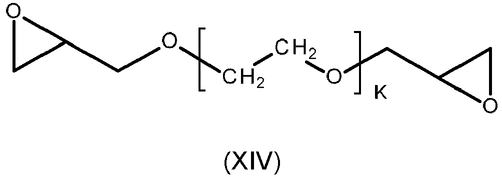 oder aus der Gruppe der Diglycidylverbindungen eines linearen oder verzweigten aliphatischen Diols mit 2 bis 8 Kohlenstoffatomen verwendet wird, wobei K eine ganzzahlige Zahl von 0 bis 12 bedeutet.

18. Phosphorhaltige Flammschutzmittelmischungen nach Anspruch 14, **dadurch gekennzeichnet, dass** für die Herstellung dieser Flammschutzmittelmischungen mindestens eine multifunktionelle Epoxidverbindung aus der Gruppe der Epoxy-Novolac-Harze, insbesondere der Epoxy-Novolac-Harze auf Basis des Phenols und Kresols der Formel (XV) 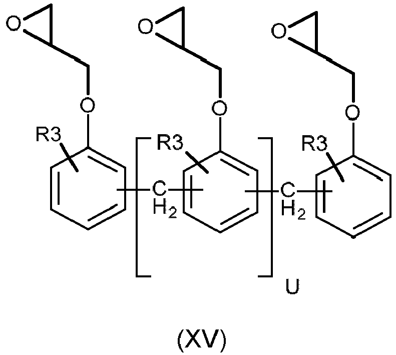 eingesetzt wird, wobei U eine ganzzahlige Zahl zwischen 1 und 12 und R³ Wasserstoff und/oder Methyl bedeutet.

19. Phosphorhaltige Flammschutzmittelmischungen nach Anspruch 14, **dadurch gekennzeichnet, dass** für die Herstellung der Flammschutzmittelmischungen mindestens eine heterocyclische Epoxidverbindung aus der Gruppe der Triglycidylisocyanurate, N-Glycidylverbindungen von aromatischen Aminen und heterocyclischen Stickstoffbasen wie N,N-Diglycidylanilin, N,N,O-Triglycidyl-p-aminophenol, Triglycidylisocyanurat und N,N,N,N-Tetraglycidyl-bis-(p-aminophenyl)-methan eingesetzt wird.

20. Phosphorhaltige Flammschutzmittelmischungen nach einem oder mehreren der Ansprüche 1 bis 22, **dadurch gekennzeichnet, dass** sie die Halogenfreiheit nach der Norm IEC 61249-2-21 erfüllen oder halogenfrei sind.

21. Verfahren zur Herstellung von Flammschutzmittelmischungen nach einem oder mehreren der Ansprüche 1 bis 20, **dadurch gekennzeichnet, dass** eine Umsetzung mindestens einer Phosphinsäure, Alkylphosphinsäure und/oder Dialkyklphosphinsäure mit dem geöffneten Ring eines Epoxids in Anwesenheit eines Katalysators erfolgt.

22. Verfahren nach Anspruch 21, **dadurch gekennzeichnet, dass** es sich bei dem Katalysator um Ethyltriphenylphosphoniumchlorid, Ethyltriphenylphosphoniumbromid, Ethyltriphenylphosphoniumiodid, Ethyltriphenylphosphoniumacetat, Ethyltriphenylphosphoniumphosphat, Tetrabutylphosphoniumchlorid, Tetrabutylphosphoniumbromid, Tetrabutylphosphoniumiodid, Tetrabutyl-phosphoniumacetat, Tetrabutylphosphoniumacetat-Essigsäurekomplex, Butyltriphenylphosphoniumtetrabromobisphenat, Butyltriphenylphosphoniumbisphenat, Butyltriphenylphosphoniumbromid und/oder Butyltriphenylphosphoniumbicarbonat handelt.

23. Verfahren nach Anspruch 21 oder 22, **dadurch kennzeichnet, dass** eine Dialkylphosphinsäure mit einem Epoxy Novolac bei 95°C bis 160°C für 1 bis 6 Stunden umgesetzt wird.

24. Verfahren nach einem oder mehreren der Ansprüche 23 bis 25, **dadurch gekennzeichnet, dass** die Flammschutzmittelmischungen mindestens eine Phosphinäureesterstruktur der Formel R¹R²P(=O)O- beinhalten und die Synthese über eine P-O-C Bindung am geöffneten Epoxidring erfolgt, wobei R¹ und R² wie in Anspruch 1 definiert sind.

25. Verwendung von phosphorhaltigen Flammschutzmittelmischungen nach einem oder mehreren der Ansprüche 1 bis 20 zur Herstellung von Epoxidharzformulierungen.

26. Flammgeschützte Epoxidharzformulierung, **dadurch gekennzeichnet, dass** sie mindestens eine phosphorhaltige Flammschutzmittelmischungen nach einem oder mehreren der Ansprüche 1 bis 20, Epoxidharze, Härter, Beschleuniger, Rheologieadditive und/oder weitere Zusätze enthält.

27. Flammgeschützte Epoxidharzformulierung nach Anspruch 26, **dadurch gekennzeichnet, dass** es sich bei den weiteren Zusätzen um Lichtschutzmittel, Farbpigmente, Dispergieradditive, Entschäumer, Treibmittel, Schaumbildner, Additive zur Verbesserung der mechanischen Beständigkeit, Additive zur Einstellung der Wärmeleitfähigkeit, Glaskugeln, Glaspulver, Glasfaser, Carbonfaser und/oder Tixotropiermittel handelt.

28. Verfahren zur Herstellung von Epoxidharzformulierungen nach Anspruch 27, **dadurch gekennzeichnet, dass** die phosphorhaltigen Flammschutzmittelmischungen nach einem oder mehreren der Ansprüche 1 bis 20 mit Epoxidharz, Härter, Beschleuniger, Rheologieadditiv und ggf. weiteren Zusätzen umgesetzt wird.

29. Verfahren nach Anspruch 28, **dadurch gekennzeichnet, dass** keine Lösungsmittel eingesetzt werden.

30. Verwendung von Epoxidharzformulierungen nach Anspruch 26 oder 27 für oder in flammgeschützten Composite-Bauteilen, Klebstoffen, Pasten, Schäumen, Schaummassen, Verschlussmassen, Heißschmelzklebern, Füllern, Vergussmassen, Spachtelmassen, Abschlussmatten, Beschichtungssystemen, Fasern, Prepregs, Lötstopplacken, thermisch leitfähigen Schichten, Wärmeleitpasten, Schockabsorberschichten, LEDs, Sensoren, Isolieranwendungen, Leiterplatten, Antennen sowie in Beschichtungssystemen.
